# EUROPEAN PATENT APPLICATION

(11) **EP 2 495 047 A1**
(43) Date of publication of application: **05.09.2012**
(21) Application number: 12157698.7
(22) Date of filing: 01.03.2012
(51) Int. Cl.: B02C 15/00, F16J 15/40

(54) **Air seal assemblies**

(30) Priority: 02.03.2011 US 201113039212
(71) Applicant: Babcock Power Services Inc., Worcester, MA 01606 (US)
(72) Inventor: Creelman, Joshua, Greenville, SC South Carolina 29605 (US); Vedani, Guillermo, Easley, SC South Carolina 29642 (US)
(74) Representative: Prüfer & Partner GbR European Patent Attorneys

(57) **Abstract**

A yoke air seal assembly (100) for sealing a vertical pulverizer yoke includes a yoke seal housing ring (102) having a plurality of circumferential segments (104) mounted together end to end in a ring. A seal ring (106,118) is mounted radially inside the housing ring (102). The seal ring (106,118) has a radially inner face having a plurality of grooves defined therein for forming a labyrinthine air seal against a pulverizer yoke. The seal ring (106,118) can be segmented into a plurality of circumferential seal ring segments (108,122). The segmented ring (106,118) configuration facilitates installation and replacement of yoke seal components, increases operational lifetime thereof, and reduces down time for such installation and replacement. Additional independent claims refer to a vertical pulverizer and a kit for a yoke air seal assembly.

## Description

### BACKGROUND OF THE INVENTION

### 1. Field of the Invention

The present invention relates to air seal assemblies, and more particularly to air seal assemblies for sealing around yokes in vertical pulverizers.

### 2. Description of Related Art

For purposes of improved and more efficient ignition in coal-fired furnaces, it is generally preferred to pulverize the coal to a fine powder before introducing it into the furnace for combustion. Coal pulverization involves systematically comminuting coal to a desired, preferably optimum size, e.g. a fine powder, prior to introduction into a coal-fired furnace. Currently, coal pulverization systems include ball tube type mills, high-speed attrition type pulverizers, and vertical roller type mills.

Vertical roller type mills pulverize coal on a rotating grinding table or bowl. A plurality of rollers typically cast in abrasion resistant material apply a shearing force downward onto the carrier table and thus apply a grinding pressure to the coal via pressure derived from a set of springs. On the top of the carrier table is mounted a set of segments cast from a similar abrasion resistant material. The pulverized coal is then removed from the mill using a high velocity stream of air and fed into a coal-fired furnace.

In typical vertical pulverizers, there is an air seal around the bottom of the grinding table, or around a yoke supporting the grinding table. The air seal prevents coal particles from reaching the gear drive and other components used to rotate the grinding table, where the coal particles could otherwise be problematic. Traditionally, the air seals have been in the form of stationary rings around the rotating yoke or grinding table base, with one or more labyrinth seals on the interior of the rings in close proximity with the yoke surface.

Traditional yoke seals for vertical pulverizers have been problematic because of the tight tolerances required for good sealing, difficulties in properly adjusting the seals, and significant down time required to replace seal rings with worn labyrinth seals. Some solutions to these problems have been attempted. For example, in one solution described in U.S. Patent No. 6,679,500 to Maurer et al., one of the two traditional labyrinth seals is replaced with a brush seal assembly. This facilitates initial installation as well as adjustment of already installed seals. However, replacement of the remaining labyrinth seal still requires the same significant down time required of traditional seal rings. Moreover, the Maurer et al. configuration uses a brush as the main wear component, which has a shorter operational life than traditional metallic wear components due to metal-metal contact made between the brush element and the spinning shaft.

Such conventional methods and systems have generally been considered satisfactory for their intended purpose. However, there is still a need in the art for air seals that allow for increased operational life time. There also remains a need in the art for such seals that improve ease of installation and replacement and allow for reduced down time. The present invention provides a solution for these problems.

### SUMMARY OF THE INVENTION

The subject invention is directed to a new and useful yoke air seal assembly for sealing a vertical pulverizer yoke. The assembly includes a yoke seal housing ring having a plurality of circumferential segments mounted together end to end in a ring. A seal ring is mounted radially inside the housing ring. The seal ring has a radially inner face having a plurality of grooves defined therein for forming a labyrinthine air seal against a pulverizer yoke.

In certain embodiments, the seal ring is segmented into a plurality of circumferential seal ring segments. The seal ring can be detachably mounted to the housing ring to facilitate replacement of the seal ring. Each seam between adjacent ends of the seal ring segments can be circumferentially offset with respect to seams between adjacent ends of circumferential segments of the housing ring.

In accordance with certain embodiments, the housing ring includes an upper seal ring mount and a lower seal ring mount spaced apart axially from the upper seal ring mount. The seal ring is an upper seal ring mounted radially inside the upper seal ring mount. A lower seal ring is mounted radially inside the lower seal ring mount. The lower seal ring has a radially inner face having a plurality of grooves defined therein for forming a labyrinthine air seal against a pulverizer yoke. The housing ring can include four segments, and each of the upper and lower seal rings can include eight circumferential segments.

The invention also provides a vertical pulverizer for particle size reduction. The pulverizer includes a sealed compartment including a grinding table and a plurality of roller wheels mounted in opposition thereto within the sealed compartment. The roller wheels and grinding table are configured and adapted to grind particles therebetween for particle size reduction. A yoke is mounted to support the grinding table. A yoke air seal assembly is mounted around the yoke for sealing the sealed compartment at a seal location around the yoke. The yoke air seal assembly including a seal housing ring and a seal ring as described above for forming a labyrinthine air seal against the yoke.

The invention also provides a kit for a yoke air seal assembly for sealing a vertical pulverizer. The kit includes at least one circumferential yoke seal housing ring segment configured and adapted to be mounted together end to end with at least one other circumferential segment to form a housing ring. The kit can also include at least one circumferential labyrinthine seal ring segment configured and adapted to be mounted together end to end with at least one other circumferential labyrinthine seal ring segment to form a labyrinthine seal ring configured and adapted to be mounted radially inside a housing ring.

In accordance with certain embodiments, the seal ring segment is configured to be detachably mounted to the housing ring segment to facilitate replacement of the seal ring segment. The seal ring segment can describe an arc of about 45°. The housing ring segment can describe an arc of about 90°.

It is contemplated that the housing ring segment can include an upper seal ring mount and a lower seal ring mount spaced apart axially from the upper seal ring mount, wherein each of the upper and lower seal ring mounts is configured and adapted to receive at least one seal ring segment mounted thereto. It is also contemplated that the housing ring segment can defines an arc of a first angle, and that the seal ring segment can define an arc of a second angle that is a different from the first angle so that when mounted together, circumferential ends of the ring segment are circumferentially offset from circumferential ends of the housing ring.

These and other features of the systems and methods of the subject invention will become more readily apparent to those skilled in the art from the following detailed description of the preferred embodiments taken in conjunction with the drawings.

### BRIEF DESCRIPTION OF THE DRAWINGS

So that those skilled in the art to which the subject invention appertains will readily understand how to make and use the devices and methods of the subject invention without undue experimentation, preferred embodiments thereof will be described in detail herein below with reference to certain figures, wherein:
Fig. 1 is a cut away perspective view of an exemplary embodiment of a vertical pulverizer constructed in accordance with the present invention, showing the grinding table and roller wheels;
Fig. 2 is a cross-sectional elevation view of a portion of the pulverizer of Fig. 1, showing the yoke and yoke seal assembly;
Fig. 3 is a perspective view of the yoke seal assembly of Fig. 2, showing the upper and lower seal ring mounts with replaceable seal rings mounted thereto; and
Fig. 4 is a partial cross-sectional perspective view of a portion of the yoke seal assembly of Fig. 3, showing the labyrinth seals of the upper and lower seal rings.

### DETAILED DESCRIPTION OF THE PREFERRED EMBODIMENTS

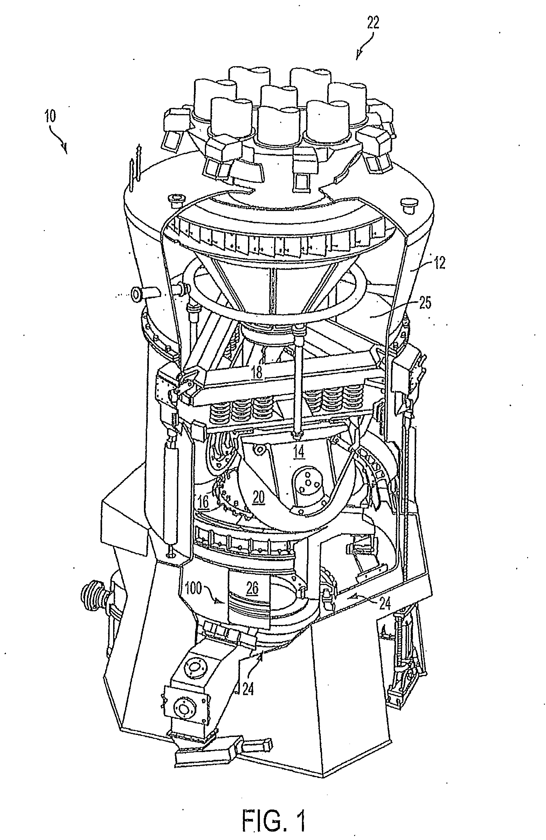

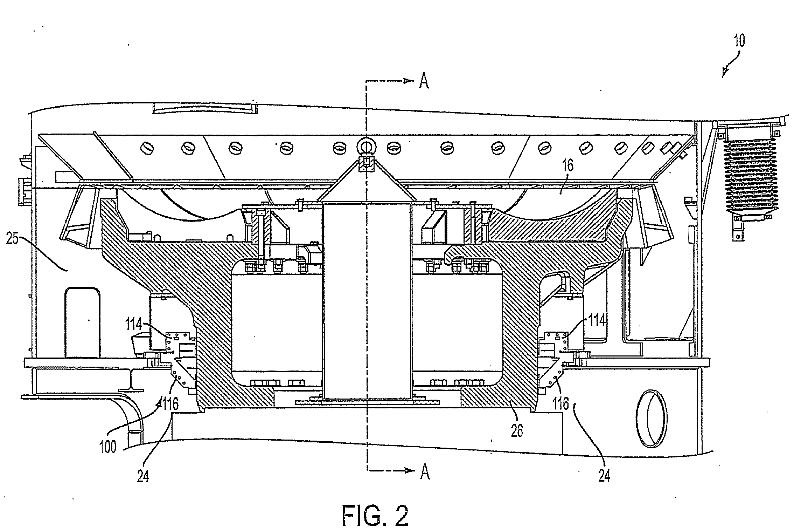

Reference will now be made to the drawings wherein like reference numerals identify similar structural features or aspects of the subject invention. For purposes of explanation and illustration, and not limitation, a partial view of an exemplary embodiment of a vertical pulverizer mill in accordance with the invention is shown in Fig. 1 and is designated generally by reference character 10. Other embodiments of pulverizers in accordance with the invention, or aspects thereof, are provided in Figs. 2-4, as will be described. The systems of the invention can be used to improve ease of installation and replacement of seal components, to reduce down time for such, and to increase the operational lifetime of yoke air seal assembly components.

Referring to Fig. 1, a vertical roller-table pulverizer mill is shown, generally designated 10, for grinding incoming material such as coal. The grinding or crushing of coal in pulverizer 10 is conducted within a sealed pulverizer housing 12. The pulverizer housing 12 contains a plurality of roll wheel assemblies 14, typically three in number, which are pressed against a grinding ring 16, also called a grinding table, by a spring loading system 18. The grinding ring 16 rotates about a vertical axis of the pulverizer 10, and each of the plurality of roll wheel assemblies 14 has a replaceable outer grinding element or tire 20 mounted for rotation thereon. Each tire 20 rotates around its respective axis of rotation through contact against the grinding ring 16. Incoming material is crushed between tires 20 and grinding ring 16. As material is pulverized between tires 20 and grinding ring 16, pulverized particles become air born and are conveyed out of mill 10 on a stream of air flowing through housing 12 out pipes 22.

In order to protect mechanical components supporting and driving grinding ring 16 from the abrasive air born particles, upper compartment 25 of pulverizer housing 12 where the grinding occurs is sealed off from a lower compartment 24, where components such as motors and reduction gears are located.

With reference now to Fig. 2, the components sealing between compartments 24 and 25 are shown in greater detail. Yoke air seal assembly 100, a stationary component, provides sealing between the stationary base of pulverizer 10 and the rotating yoke 26, which rotates about the vertical axis of pulverizer 10, namely axis-A. During operation, as yoke 26 rotates within seal assembly 100, the space between yoke 26 and seal assembly 100 is pressurized with air to a pressure greater than that in upper compartment 25, causing a flow of air upward between seal assembly 100 and yoke 26. This flow of air prevents abrasive air borne particles in upper compartment 25 from entering compartment 24. In this manner, mechanical components outside upper compartment 25, such as reduction gears for rotating grinding ring 16, as well as the sealing surfaces of seal assembly 100 itself, are protected from being fouled by the air born particles of upper compartment 25.

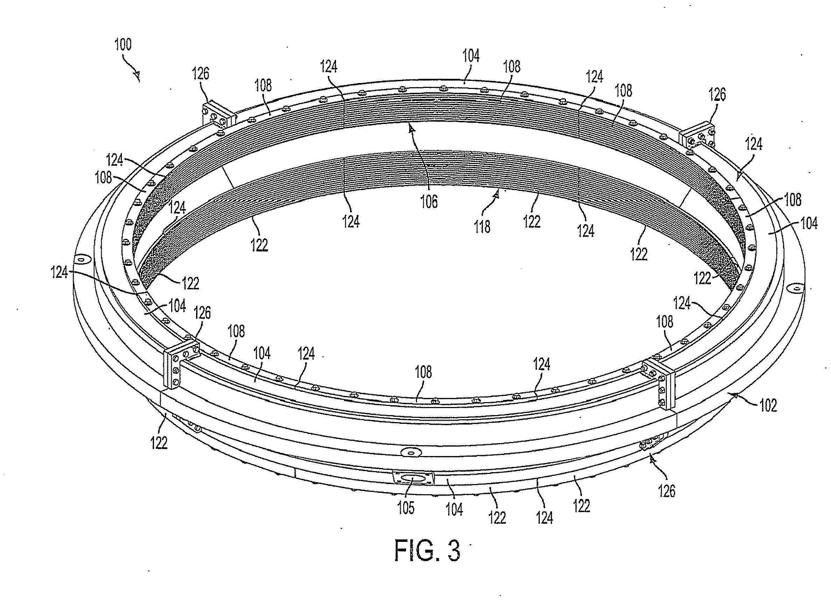

Referring now to Fig. 3, seal assembly 100 includes a yoke seal housing ring 102. Housing ring 102 is made up of four circumferential segments 104 mounted together end to end in to form a complete ring. At least one of the four circumferential segments 104 includes a seal air inlet 105 for use in pressurizing the space between housing ring 102 and yoke 26, to provide a flow of air for keeping air seal assembly 100 and lower compartment 24 free of airborne particles, as described above. Each of the segments 104 of housing ring 102 describes an arc of about 90°. An upper seal ring 106 is mounted to housing ring 102 radially inside thereof. Seal ring 106 is segmented into eight circumferential seal ring segments 108. Each of the segments 108 describes an arc of about 45°. A lower seal ring 118 is mounted to housing ring 102, spaced axially apart along axis-A from upper seal ring 106. Like upper seal ring 106, lower seal ring 118 is segmented into eight circumferential ring segments 122, each of which describes an arc of about 45°.

Each seam 124 between adjacent ends of the seal ring segments 108 and 122 is circumferentially offset with respect to seams 126 between adjacent ends of circumferential segments 104 of housing ring 102. The configuration with four circumferential segments 104 and eight seal ring segments 108 and 122 provides for ease of installation, however those skilled in the art will readily appreciate that any suitable numbers of circumferential and seal ring segments can be used without departing from the spirit and scope of the invention.

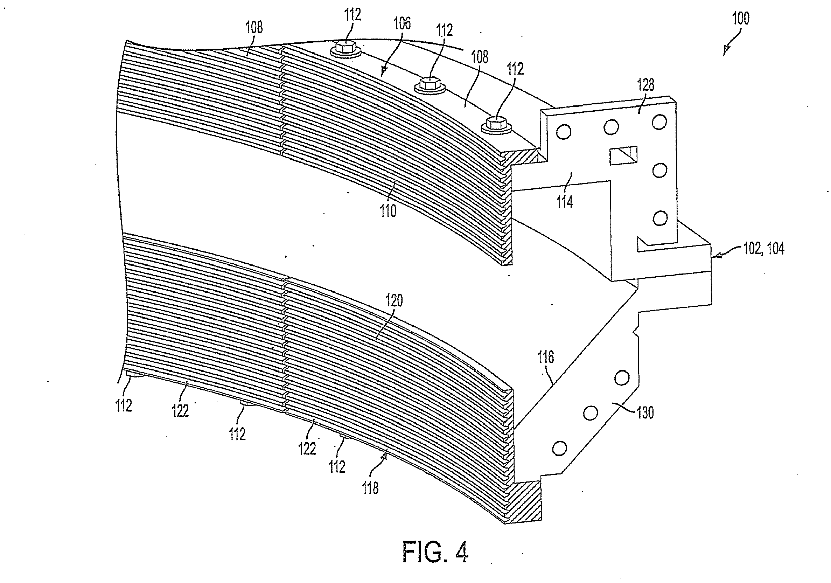

With reference now to Fig. 4, each of the upper and lower seal rings 106 and 118 has a respective radially inner face 110 and 120 having a plurality of grooves defined therein for forming a labyrinthine air seal against yoke 26. Seal rings 106 and 118 are mounted to housing ring 102 by fasteners 112. Seal rings 106 and 118, and the respective segments 108 and 122 thereof, are therefore detachable from housing ring 102. The seal rings 106 and 118 and/or the respective individual segments 108 and 122 thereof, can therefore be replaced without having to replace housing ring 102. It is even possible to change out seal rings 106 and 118 without removing housing ring 102 from yoke 26, thus contributing to ease of installation and replacement of the seal rings. Upper seal ring 106 is mounted to upper seal ring mount 114 of housing ring 102, radially inside mount 114. A lower seal ring mount 116 is spaced apart axially from upper seal ring mount 114, i.e. along axis-A, which is shown in Fig. 2. Lower seal ring 118 8 is mounted radially inside lower seal ring mount 116. The labyrinthine air seals of seal rings 106 and 118 form tortuous air paths therethrough to limit air leakage from the space between housing ring 102 and yoke 26. In this manner, a non-contact seal is created by controlling the passage of fluid through the series of chambers, i.e., the grooves in the seal faces 110 and 120, by centrifugal motion and by the formation of controlled fluid vortices therein. Therefore, a limited amount of pressurizing air from seal air inlet 105, shown in Fig. 3, passes out of the interior space between housing ring 102 and yoke 26 by passing between yoke 26 and the respective labyrinth seals of seal rings 106 and 118.

An upper flange 128 is included at each end of each segment 104 of housing ring 102, and a lower flange 130 is similarly included at each end of each segment 104. Circumferentially adjacent segments 104 can be joined together by mounting their respective flanges 128 and 130 together with fasteners, as shown in Fig. 3. The respective upper and lower seal rings 106 and 118 can be mounted to housing ring 102 before or after mounting segments 104 of housing ring 102 together.

Segments 104 of housing ring 102 are constructed of fabricated steel plate. Segments 108 and 122 of seal rings 106 and 118 are configured as removable wear components and can be made of cast steel (e.g., ASTM A27) or cast bronze (SAE 660). However, those skilled in the art will readily appreciate that any other suitable materials can be used without departing from the spirit and scope of the invention.

The yoke seal assemblies described herein greatly facilitate the processes of installation and removal of yoke seal assemblies from vertical pulverizers when compared to traditional yoke seal assemblies. Traditional yoke air seal assemblies are constructed as a solid ring. Using such traditional yoke seal assembly requires that the ring of the assembly pass under the end of the yoke of a pulverizer during installation and removal of the assembly. The segmented configuration of housing ring 102 and seal rings 106 and 118 greatly facilitate installation and removal because the segments can pass around the circumference of the yoke of a pulverizer before being jointed together end to end as described above to form a seal around the yoke. In order for a traditional, solid ring yoke air seal assembly to pass under the end of the yoke of a vertical pulverizer, the yoke, grinding ring, and related components must be lifted and suspended to create a clearance below the yoke sufficient to allow the solid ring to pass under the yoke. With a segmented configuration in accordance with the invention, it is not necessary to lift or suspend the yoke, grinding ring, or related components, since the segments can be assembled around the yoke. It is estimated that in vertical pulverizers using traditional solid ring air seal assemblies, about 32-34 days of down time are required to replace a yoke air seal assembly. By contrast, it is estimated that using a segmented yoke air seal assembly as described above, the down time is reduced to about 6-7 days for the same task. Without wishing to be bound by theory, it is believed that installation time alone for a new air seal assembly is reduced to about 1/10 of the traditional installation time by using a segmented configuration as described above.

While the air seal configurations disclosed above have been described in the exemplary context of coal pulverization, those skilled in the art will readily appreciate that the invention can be practiced in any other suitable application. Moreover, while described above in the exemplary context of a vertical roller-table pulverizer mill, those skilled in the art will readily appreciate that air seal assemblies as described above can be used in any other suitable sealing application without departing from the spirit and scope of the invention.

The methods and systems of the present invention, as described above and shown in the drawings, provide for yoke air seal assemblies with superior properties including ease of installation and removal, increased operational lifetime, and reduced downtime. Operational lifetime is increased through the function of the labyrinth seal (i.e., non-contacting sealing) and through use of suitable wear materials. While the apparatus and methods of the subject invention have been shown and described with reference to preferred embodiments, those skilled in the art will readily appreciate that changes and/or modifications may be made thereto without departing from the spirit and scope of the subject invention.

## Claims

1. A yoke air seal assembly for sealing a vertical pulverizer yoke comprising:
a) a yoke seal housing ring including a plurality of circumferential segments mounted together end to end in a ring; and
b) a seal ring mounted radially inside the housing ring, wherein the seal ring has a radially inner face having a plurality of grooves defined therein for forming a labyrinthine air seal against a pulverizer yoke.

2. A yoke air seal assembly as recited in claim 1, wherein the seal ring is detachably mounted to the housing ring to facilitate replacement of the seal ring.

3. A yoke air seal assembly as recited in claim 1 or 2, wherein the seal ring is segmented into a plurality of circumferential seal ring segments.

4. A yoke air seal assembly as recited in claim 3, wherein each seam between adjacent ends of the seal ring segments is circumferentially offset with respect to seams between adjacent ends of circumferential segments of the housing ring.

5. A yoke air seal assembly as recited in one of claims 1 to 4, wherein the housing ring includes an upper seal ring mount and a lower seal ring mount spaced apart axially from the upper seal ring mount, wherein the seal ring is an upper seal ring mounted radially inside the upper seal ring mount, and further comprising a lower seal ring mounted radially inside the lower seal ring mount, wherein the lower seal ring has a radially inner face having a plurality of grooves defined therein for forming a labyrinthine air seal against a pulverizer yoke.

6. A yoke air seal assembly as recited in claim 5, wherein the housing ring includes four segments, and wherein each of the upper and lower seal rings includes eight circumferential segments.

7. A vertical pulverizer for particle size reduction comprising:
a) a sealed compartment including a grinding table and a plurality of roller wheels mounted in opposition thereto within the sealed compartment, wherein the roller wheels and grinding table are configured and adapted to grind particles therebetween for particle size reduction;
b) a yoke mounted to support the grinding table; and
c) a yoke air seal assembly mounted around the yoke for sealing the sealed compartment at a seal location around the yoke, the yoke air seal assembly including:
i) a yoke seal housing ring including a plurality of circumferential segments mounted together end to end in a ring; and
ii) a seal ring mounted radially inside the housing ring, wherein the seal ring has a radially inner face having a plurality of grooves defined therein for forming a labyrinthine air seal against the yoke.

8. A vertical pulverizer as recited in claim 7, wherein the seal ring is detachably mounted to the housing ring to facilitate replacement of the seal ring.

9. A vertical pulverizer as recited in claim 7 or 8, wherein the seal ring is segmented into a plurality of circumferential seal ring segments.

10. A vertical pulverizer as recited in claim 9, wherein each seam between adjacent ends of the seal ring segments is circumferentially offset with respect to seams between adjacent ends of circumferential segments of the housing ring.

11. A vertical pulverizer as recited in one of claims 7 to 10, wherein the housing ring includes an upper seal ring mount and a lower seal ring mount spaced apart axially from the upper seal ring mount, wherein the seal ring is an upper seal ring mounted radially inside the upper seal ring mount, and further comprising a lower seal ring mounted radially inside the lower seal ring mount, wherein the lower seal ring has a radially inner face having a plurality of grooves defined therein for forming a labyrinthine air seal against the pulverizer yoke.

12. A vertical pulverizer as recited in claim 11, wherein the housing ring includes four segments, and wherein each of the upper and lower seal rings includes eight circumferential segments.

13. A kit for a yoke air seal assembly for sealing a vertical pulverizer comprising:
at least one circumferential yoke seal housing ring segment configured and adapted to be mounted together end to end with at least one other circumferential segment to form a housing ring.

14. A kit as recited in claim 13, further comprising at least one circumferential labyrinthine seal ring segment configured and adapted to be mounted together end to end with at least one other circumferential labyrinthine seal ring segment to form a labyrinthine seal ring configured and adapted to be mounted radially inside a housing ring.

15. A kit as recited in claim 14, wherein the seal ring segment is configured to be detachably mounted to the housing ring segment to facilitate replacement of the seal ring segment, and/or wherein the seal ring segment describes an arc of about 45°.

16. A kit as recited in claim 14 or 15, wherein the housing ring segment includes an upper seal ring mount and a lower seal ring mount spaced apart axially from the upper seal ring mount, wherein each of the upper and lower seal ring mounts is configured and adapted to receive at least one seal ring segment mounted thereto, and wherein, preferably the housing ring segment defines an arc of a first angle, and wherein preferably the seal ring segment defines an arc of a second angle that is a different from the first angle so that when mounted together, circumferential ends of the ring segment are circumferentially offset from circumferential ends of the housing ring.

17. A kit as recited in one of claims 13 to 16, wherein the housing ring segment describes an arc of about 90°.
